# FASCICULE DE BREVET EUROPEEN

(11) **EP 4 435 257 B1**
(45) Date de publication et mention de la délivrance du brevet: **08.10.2025**
(21) Numéro de dépôt: 24158637.9
(22) Date de dépôt: 20.02.2024
(51) Int. Cl.: F04B 15/08, F17C 5/02, F17C 5/06

(54) **DISPOSITIF ET PROCÉDÉ DE COMPRESSION**
KOMPRESSIONSVORRICHTUNG UND -VERFAHREN
COMPRESSION DEVICE AND METHOD

(30) Priorité: 21.03.2023 FR 2302593
(43) Date de publication de la demande: 25.09.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: TRY, Rasmey, 38360 SASSENAGE (FR)
(74) Mandataire: Air Liquide

(56) Documents cités:
- EP-A1- 2 535 585
- EP-A2- 0 174 269
- FR-A1- 2 904 401
- FR-A1- 3 107 103

## Description

L'invention concerne un dispositif et un procédé de compression.

L'invention concerne plus particulièrement un dispositif de compression d'un fluide comportant une chambre de compression abritant un piston mobile, le dispositif comprenant une première extrémité abritant une première extrémité de la chambre de compression, le dispositif comprenant une seconde extrémité abritant une seconde extrémité de la chambre de compression, le piston étant mobile en translation entre les première et seconde extrémités de la chambre de compression, le dispositif comprenant un circuit de régénération reliant les première et seconde extrémités de la chambre de compression et comportant un régénérateur, le dispositif comprenant une conduite d'alimentation comprenant une extrémité amont destinée à être reliée à une source de fluide à comprimer et une extrémité aval débouchant dans la première extrémité de la chambre de compression, la conduite d'alimentation comprenant un ensemble de clapet(s), le dispositif comprenant au moins une conduite d'évacuation du fluide comprimé comprenant une extrémité amont reliée à la chambre de compression et une extrémité aval destinée à être reliée à un récepteur du fluide comprimé.

Les documents FR2904401A1 et FR3007077A1 décrivent un tel dispositif de compression parfois appelé « compresseur thermique ».

Les dispositifs de ce type peuvent présenter une efficacité satisfaisante. Il est recherché des solutions pour améliorer cette efficacité et par exemple l'optimisation énergétique pour la gestion de la pression dans le stockage d'alimentation du dispositif.

En fonctionnement un tel dispositif comprend généralement les étapes suivantes.

Compression: le piston est en position extrême dans la seconde extrémité de la chambre de compression (côté relativement chaud du dispositif 1). Le clapet de la conduite d'alimentation a été est ouvert, du fluide (gaz ou liquide) a été précédemment est introduit et remplit le volume de la première extrémité de la chambre de compression (à partir du réservoir sous pression ou via une pompe). Ensuite, le piston est actionné vers la première extrémité de la chambre de compression. Ceci entraine un transfert de fluide de la première extrémité (froide) vers la seconde extrémité (chaude). En pratique, la force nécessaire n'est limitée que par l'impédance de transfert du gaz à travers le régénérateur.

Lorsque le gaz se réchauffe dans la seconde extrémité chaude, la pression commence à augmenter dans le système. Le clapet de la conduite d'alimentation est fermé et le clapet de la conduite 10 d'évacuation reste fermé tant que la pression est inférieure à un seuil d'ouverture (par exemple la pression d'un réservoir de sortie relié à la conduite d'évacuation). La masse de fluide excédentaire est alors expulsée par le clapet de la conduite d'évacuation à une pression de préférence constante. Lorsque le piston arrive à sa position extrême au fond de la première extrémité de la chambre de compression, il occupe de préférence tout ce volume d'extrémité de la chambre de compression. Lors du transfert de la chambre chaude vers la chambre froide, le froid du fluide provenant de la chambre froide stocke le froid dans les parois du régénérateur, qui sera restitué au fluide dans la phase de régénération.

Régénération: le piston est déplacé à nouveau vers la seconde extrémité de la chambre de compression (phase de régénération). Ceci déplace le fluide de la seconde extrémité (chaude) vers la première extrémité (froide) de la chambre de compression. Pendant ce processus, le flux de masse se déplace de la seconde extrémité (chaude) vers la première extrémité (froide). Le fluide récupère le froid stocké dans les parois du régénérateur. Lorsque le fluide se refroidit, la pression dans le dispositif de compression commence à baisser. Lorsque la pression dans la première extrémité de la chambre de compression devient inferieure à un seuil, le clapet de la conduite d'évacuation se ferme et le clapet de la conduite d'alimentation peut à nouveau s'ouvrir pour recommencer le processus.

Cette dernière étape peut générer une grande perte d'efficacité du compresseur thermique. Le fluide revenant de la chambre chaude porte en effet les inefficacités de l'échangeur régénératif (pincement en température) et de compression (différentiel de température dû à la compression du cycle précédent).

Par exemple, dans le cas de la compression de l'hydrogène liquide de 1 bar à 20 bar, la température augmente naturellement de 20,2 K à 21,1 K en raison de la compression. C'est-à-dire que le côté froid du régénérateur sera à minima à une température de 21,1 K. C'est-à-dire que le fluide revenant de la chambre chaude sera au mieux supérieure ou égale à 21,1 K, plus le pincement du régénérateur. La quantité de chaleur injectée dans la chambre froide correspond alors au débit de retour de la chambre chaude multiplié par la différence d'enthalpie entre 20,2 K et 21,1 K.

L'invention propose une amélioration de l'efficacité du compresseur thermique et/ou une optimisation énergétique pour diminuer la consommation de pressurisation du stockage d'alimentation du compresseur thermique.

A cette fin, le dispositif selon l'invention, par ailleurs conforme à la définition générique qu'en donne le préambule ci-dessus, est essentiellement caractérisé en ce qu'il comprend une conduite de dérivation comprenant une extrémité amont reliée au circuit de régénération et une extrémité aval reliée à un organe de récupération, la conduite de dérivation étant configurée pour retirer une fraction de fluide lors d'une phase de régénération durant laquelle le piston est déplacé de la seconde extrémité vers la première extrémité de la chambre de compression.

Par ailleurs, des modes de réalisation de l'invention peuvent comporter l'une ou plusieurs des caractéristiques suivantes :
- l'extrémité amont de la conduite de dérivation est reliée au circuit de régénération au niveau de la seconde extrémité de la chambre de compression et/ou au niveau de la première et extrémité de la chambre de compression et/ou au niveau du régénérateur,
- la conduite de dérivation comprend un ensemble de vanne(s) par exemple au moins une vanne de régulation de pression et/ou de débit,
- le dispositif comprend un réservoir de fluide liquéfié, par exemple de fluide cryogénique liquéfie constituant une source de fluide reliée à l'extrémité amont de la conduite d'alimentation et en ce que l'organe de récupération comprend ledit réservoir,
- la conduite de dérivation comprend une vanne de régulation de pression et/ou de débit pilotée en fonction de la pression au sein du réservoir de fluide et/ou de la pression au sein de la chambre de compression, par exemple au niveau de la seconde extrémité de la chambre de compression,
- la vanne de régulation de pression et/ou de débit est configurée pour assurer une régulation pilotée en fonction du différentiel de pression entre la pression au sein du réservoir de fluide et la pression au sein de la chambre de compression,
- l'ensemble de clapet(s) de la conduite d'alimentation comprend un organe anti-retour tel qu'un clapet anti-retour,
- la seconde extrémité du dispositif comprend un système de réchauffage,
- la première extrémité du dispositif comprend un système de refroidissement ou de réchauffage,
- le régénérateur comprend un tube échangeur de chaleur, notamment un tube cylindrique, rempli d'un matériau configuré pour emmagasiner et restituer la chaleur et laisser passer le fluide à l'état liquide et/ou gazeux.

L'invention concerne également un procédé de compression de fluide au moyen d'un dispositif conforme à l'une quelconque des caractéristiques ci-dessus ou ci-dessous comprenant les étapes successives suivantes: a) admission d'un fluide à l'état liquide à une pression initiale dans la première extrémité de la chambre de compression via la conduite d'alimentation, b) compression par déplacement du piston vers la première extrémité de la chambre de compression et transfert du fluide de la première extrémité de la chambre de compression vers la seconde extrémité de la chambre de compression via la conduite de régénération, la seconde extrémité du dispositif étant maintenue à une température supérieure à la température de la première extrémité, c) régénération par déplacement du piston vers la seconde extrémité de la chambre de compression et transfert du fluide de la seconde extrémité de la chambre de compression vers la première extrémité de la chambre de compression, le procédé comprenant, lors de l'étape c) de régénération, une étape de dérivation en dehors de la chambre de compression d'une fraction du fluide transféré de la seconde extrémité de la chambre de compression vers la première extrémité de la chambre de compression.

Selon d'autres particularités possibles, l'admission du fluide à l'état liquide à une pression initiale dans la première extrémité de la chambre de compression est réalisée à partir d'un réservoir de fluide liquéfié et en ce que lors de l'étape de dérivation la fraction de fluide est envoyée vers ce réservoir.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :

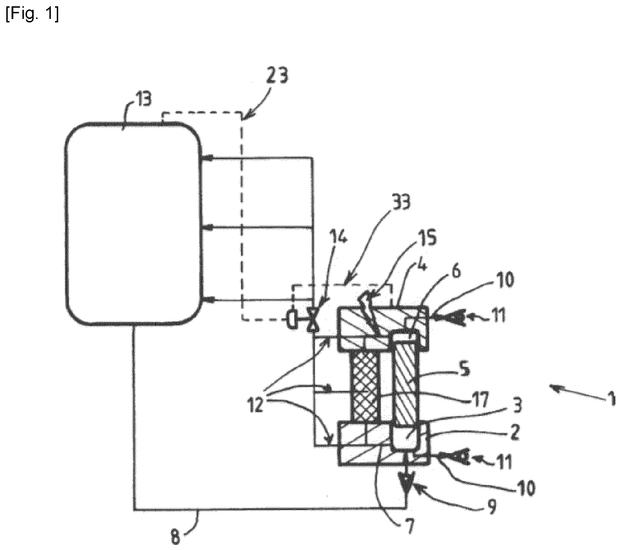

[Fig. 1] représente une vue en coupe, schématique et partielle illustrant un exemple de structure et fonctionnement d'un exemple de réalisation d'un dispositif de compression selon l'invention,

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Le dispositif 1 de compression d'un fluide illustré à la [Fig. 1] (ou « compresseur thermique ») comprend un bâti ou carter abritant une chambre de compression dans laquelle est logé un piston 5 mobile. Le dispositif 1 comprend une première extrémité 2 abritant une première extrémité 3 de la chambre de compression (extrémité relativement froide), le dispositif 1 comprenant une seconde extrémité 4 abritant une seconde extrémité 6 de la chambre de compression (extrémité relativement chaude). Dans ce compresseur, les deux chambres ou extrémités 3, 6 sont généralement pratiquement à la même pression, aux pertes de charge de l'échangeur régénératif près.

Le piston 5 est mobile en translation entre les première 3 et seconde 6 extrémités de la chambre de compression (via tout système d'entrainement approprié et non décrit par soucis de simplification).

Le dispositif 1 comprend une conduite 7 de régénération reliant les première 3 et seconde 6 extrémités de la chambre de compression et comportant un régénérateur 17.

Le dispositif 1 comprend en outre une conduite 8 d'alimentation ayant une extrémité amont destinée à être reliée à une source 13 de fluide à comprimer et une extrémité aval débouchant dans la première extrémité 3 de la chambre de compression. La source 13 est de préférence un réservoir de fluide cryogénique, par exemple de l'hydrogène liquéfié.

Le réservoir 13 contient de préférence un fluide cryogénique sous forme diphasique et alimente le dispositif de compression thermique avec du liquide, de préférence dans un état proche de la saturation et pouvant éventuellement être en sous refroidi. Sur le schéma, il n'est pas représenté des organes de contrôle de la pression du réservoir 13 (système de pressurisation et/ou dépressurisation) qui peuvent être prévus de façon classique.

La conduite 8 d'alimentation comprend un ensemble de clapet(s) ou vanne(s), notamment un clapet 9 anti-retour. Le dispositif 1 comprend au moins une conduite 10 d'évacuation du fluide comprimé comprenant une extrémité amont reliée à la chambre de compression et une extrémité aval destinée à être reliée à un récepteur du fluide comprimé. Cette conduite 10 d'évacuation comprend également un ensemble de clapet(s) ou vanne(s), par exemple un clapet 11 anti retour. Par exemple, la conduite 10 d'évacuation du fluide comprimé a son extrémité amont reliée à la première et/ou la seconde extrémité de la chambre de compression.

Par exemple, et comme illustré, le dispositif 1 peut comporter deux sorties d'évacuation (à partir de la chambre chaude et de la chambre froide). Il est également possible d'envisager une évacuation à une température intermédiaire entre ces deux extrémités.

Par exemple, l'extrémité amont de la conduite 10 d'évacuation du fluide comprimé est reliée à la première extrémité 3 de la chambre de compression. C'est-à-dire que le fluide comprimé est évacué à partir de l'extrémité 3 relativement froide du dispositif 1. Ceci permet de produire du fluide comprimé relativement froid.

La conduite 7 de régénération est de préférence distincte de la conduite 10 d'évacuation. C'est-à-dire que cette conduite 7 de régénération relie les deux extrémités 3, 6 de la chambre de compression en passant par le régénérateur 17 et ne permet ainsi que le transit direct entre ces extrémités lors des mouvements du piston 5.

L'extrémité aval de la conduite 8 d'alimentation est de préférence reliée directement à la première extrémité 3 de la chambre de compression, c'est-à-dire sans passer par une chambre de pré-compression. C'est-à-dire que le fluide à comprimer est injecte directement dans la chambre 3 de compression.

Classiquement, le régénérateur 17 peut comprendre un tube échangeur de chaleur, notamment un tube cylindrique, rempli d'un matériau configure pour emmagasiner et restituer la chaleur et laisser passer le fluide à l'état liquide et/ou gazeux. Bien entendu, tout autre structure appropriée d'échangeur de chaleur peut être envisagée.

Un fonctionnement peut être le suivant. Dans une première étape de compression la première extrémité 3 (froide) est remplie de fluide froid fourni par le réservoir 13. La seconde extrémité 6 (chaude) est à son volume minimal. Le piston 3 est déplacé de la seconde extrémité 6 vers la première extrémité 3, forçant le passage du fluide dans le régénérateur 17. Le fluide se réchauffe dans le régénérateur et éventuellement dans un échangeur supplémentaire.

Le fluide ainsi réchauffé permet de pressuriser les extrémités 3, 6 de la chambre de compression (iso-pression). Une fois que la pression de refoulement est atteinte, le clapet 11 de sortie s'ouvre. Dans une phase suivante de régénération et d'injection : le piston 5 est déplacé de la première 3 vers la seconde 6 extrémité, forçant alors le fluide à passer à nouveau dans le régénérateur 17. Le fluide se refroidit et permet de diminuer la pression au sein du compresseur. Une fois cette pression inférieure à celle du réservoir 13, le clapet 9 d'alimentation du s'ouvre. Ainsi, le fluide d'entrée (venant du réservoir 13) et le fluide revenant du régénérateur 17 se mélangent dans la chambre froide (première extrémité 3). Le niveau de liquide dans le réservoir d'alimentation diminue ce que fait diminuer la pression au sein du réservoir 13. Un système interne ou externe de pressurisation peut permettre d'y maintenir une pression.

Selon une particularité avantageuse, le dispositif 1 comprend en outre une conduite 12 de dérivation comprenant une extrémité amont reliée au circuit 7 de régénération et une extrémité aval reliée à un organe 13 de récupération extérieur à la chambre de compression.

Cette conduite 12 de dérivation est configurée pour retirer une fraction de fluide lors de la phase de régénération durant laquelle le piston 5 est déplacé de la seconde 6 vers la première 3 extrémité de la chambre de compression pour refroidir et abaisser la pression de fluide qui avait été réchauffé dans la phase précédente.

C'est-à-dire qu'il y a un soutirage de fluide du compresseur thermique durant la phase de régénération. En soutirant du fluide dans cette phase, moins de fluide est mélangé avec le liquide d'alimentation qui est admis dans la première extrémité 3 de la chambre de compression.

De plus, le débit de fluide de retour de la seconde extrémité 6 chaude étant diminué, le pincement en température au niveau du point froid de l'échangeur 17 régénératif est amélioré. Cette dérivation de fluide réduit également la quantité de chaleur renvoyée dans la première extrémité 3 de la chambre de compression due à l'inefficacité de la compression.

Ces deux effets conduisent à une augmentation du taux de liquide à la fin de la phase d'injection et donc à une augmentation l'efficacité du dispositif 1.

Ceci permet d'améliorer l'efficacité de fonctionnement du dispositif et peut en particulier s'adapter selon le fluide et les conditions de fonctionnement.

Le soutirage optimal de cette fraction de fluide retirée par la conduite 12 de dérivation est de préférence réalisé au niveau de la seconde extrémité 6 de la chambre de compression (extrémité chaude). Cependant, cette dérivation peut prélever le fluide à tout endroit du retour entre la seconde extrémité 6 et la première extrémité 3 (cf. les trois points de prélèvement représenté à titre d'exemple).

Le fluide prélevé par la conduite 12 de dérivation soutiré est donc relativement chaud, et se situe à haute pression, proche de la pression de refoulement du compresseur thermique au début de la phase de régénération. Ensuite, la pression diminue dans le compresseur à mesure que le fluide est soutiré et qu'une partie du fluide traverse le régénérateur 17.

Comme illustré, tout ou partie de ce fluide soutiré du compresseur thermique peut être renvoyé dans le réservoir 13, par exemple pour pressuriser ce dernier. En effet, la pression au sein du réservoir a tendance à diminuer du fait du débit du compresseur thermique. Cela permettrait à la fois d'augmenter l'efficacité du compresseur thermique et de mitiger l'utilisation d'un système de pressurisation du stockage. Le point de réinjection dans le réservoir 13 peut être situé à n'importe quelle hauteur du réservoir 13, par exemple en partie supérieure, dans ciel gazeux.

La quantité de fluide prélevé par la conduite 12 de dérivation vers le réservoir 13 pour sa pressurisation peut être une variable d'optimisation et de régulation du dispositif 1. Par exemple, si la quantité de fluide dérivée ne suffit pas à pressuriser le réservoir 13, le système de maintien de la pression du réservoir 13 peut être activé. Au contraire, si la quantité de fluide dérivée est trop importante, il est possible de ne dériver que la quantité de fluide nécessaire pour la pressurisation.

La conduite 12 de dérivation comprend de préférence vanne 14 de régulation de pression et/ou de débit qui est par exemple pilotée. Par exemple la vanne 14 est pilotée en fonction de la pression au sein du réservoir 13 de fluide et/ou de la pression au sein de la chambre de compression et par exemple au niveau de la seconde extrémité 6 de la chambre de compression.

Un système actif de contrôle de l'injection de ce fluide soutiré peut être mis en place afin de contrôler les différences de pression entre le compresseur thermique (chambre de compression) et le réservoir 13. Lors de la phase d'injection, la pression du réservoir 13 est supérieure à celle au sein du compresseur thermique. Lors des phases de compression et de régénération, la pression du compresseur est supérieure à celle du réservoir 13 jusqu'à un certain point de la phase de régénération. L'ouverture de la vanne 14 de dérivation doit donc s'effectuer de préférence en fonction du différentiel de pression entre le réservoir et le compresseur thermique. Ceci permet d'utiliser de l'énergie inefficace du compresseur thermique en énergie efficace pour le réservoir 13.

Il est possible d'utiliser un volume tampon sur la conduite 12 dérivation dans le but de lisser la quantité de gaz retournant dans le réservoir 13.

Le dispositif 1 de compression peut être alimenté en gaz ou en liquide. Dans ce dernier cas des performances de compression plus grandes sont obtenues.

L'invention s'applique avantageusement à la compression d'hydrogène liquide mais pourrait concerner un fluide choisi dans la liste comprenant He, H2, Ne, CO, Ar, N2, 02, CH4, C02, NO, Kr, Xe ou tout mélange de deux ou plus de ces espèces chimiques.

## Revendications

1. Dispositif de compression d'un fluide comportant une chambre de compression abritant un piston (5) mobile, le dispositif comprenant une première extrémité (2) abritant une première extrémité (3) de la chambre de compression, le dispositif (1) comprenant une seconde extrémité (4) abritant une seconde extrémité (6) de la chambre de compression, le piston (5) étant mobile en translation entre les première (3) et seconde (6) extrémités de la chambre de compression, le dispositif (1) comprenant un circuit (7) de régénération reliant les première (3) et seconde (6) extrémités de la chambre de compression et comportant un régénérateur (17), le dispositif (1) comprenant une conduite (8) d'alimentation comprenant une extrémité amont destinée à être reliée à une source (13) de fluide à comprimer et une extrémité aval débouchant dans la première extrémité (3) de la chambre de compression, la conduite (8) d'alimentation comprenant un ensemble de clapet(s) (9), le dispositif (1) comprenant au moins une conduite (10) d'évacuation du fluide comprimé comprenant une extrémité amont reliée à la chambre de compression et une extrémité aval destinée à être reliée à un récepteur du fluide comprimé, **caractérisé en ce qu'**il comprend une conduite (12) de dérivation comprenant une extrémité amont reliée au circuit (7) de régénération et une extrémité aval reliée à un organe (13) de récupération, la conduite (12) de dérivation étant configurée pour retirer une fraction de fluide lors d'une phase de régénération durant laquelle le piston (5) est déplacé de la seconde (6) extrémité vers la première (3) extrémité de la chambre de compression.

2. Dispositif selon la revendication 1, caractérisé l'extrémité amont de la conduite (12) de dérivation est reliée au circuit (7) de régénération au niveau de la seconde (6) extrémité de la chambre de compression et/ou au niveau de la première (3) et extrémité de la chambre de compression et/ou au niveau du régénérateur (17).

3. Dispositif selon la revendication 1 ou 2, **caractérisé en ce que** la conduite (12) de dérivation comprend un ensemble de vanne(s) (14) par exemple au moins une vanne de régulation de pression et/ou de débit.

4. Dispositif selon l'une quelconque des revendications 1 à 3, **caractérisé en ce qu'**il comprend un réservoir (13) de fluide liquéfié, par exemple de fluide cryogénique liquéfie constituant une source de fluide reliée à l'extrémité amont de la conduite (8) d'alimentation et **en ce que** l'organe (13) de récupération comprend ledit réservoir (13).

5. Dispositif selon les revendications 3 et 4, **caractérisé en ce que** la conduite (12) de dérivation comprend une vanne (14) de régulation de pression et/ou de débit pilotée en fonction de la pression au sein du réservoir (13) de fluide et/ou de la pression au sein de la chambre de compression, par exemple au niveau de la seconde extrémité (6) de la chambre de compression.

6. Dispositif selon la revendications 5, **caractérisé en ce que** la vanne (14) de régulation de pression et/ou de débit est configurée pour assurer une régulation pilotée en fonction du différentiel de pression entre la pression au sein du réservoir (13) de fluide et la pression au sein de la chambre de compression.

7. Dispositif selon l'une quelconque des revendications 1 à 6, **caractérisé en ce que** l'ensemble de clapet(s) de la conduite (8) d'alimentation comprend un organe (9) anti-retour tel qu'un clapet anti-retour.

8. Dispositif selon l'une quelconque des revendications 1 à 7, **caractérisé en ce que** la seconde extrémité (4) du dispositif (1) comprend un système (15) de réchauffage.

9. Dispositif selon l'une quelconque des revendications 1 à 8, **caractérisé en ce que** la première extrémité (2) du dispositif (1) comprend un système de refroidissement ou de réchauffage.

10. Dispositif selon l'une quelconque des revendications 1 à 9, **caractérisé en ce que** le régénérateur (17) comprend un tube échangeur de chaleur, notamment un tube cylindrique, rempli d'un matériau configuré pour emmagasiner et restituer la chaleur et laisser passer le fluide à l'état liquide et/ou gazeux.

11. Procédé de compression de fluide au moyen d'un dispositif conforme à l'une quelconque des revendications 1 à 10, **caractérisé en ce qu'**il comprend les étapes successives suivantes: a) admission d'un fluide à l'état liquide à une pression initiale dans la première extrémité (3) de la chambre de compression via la conduite (8) d'alimentation, b) compression par déplacement du piston (5) vers la première extrémité (3) de la chambre de compression et transfert du fluide de la première extrémité (3) de la chambre de compression vers la seconde extrémité (6) de la chambre de compression via la conduite (7) de régénération, la seconde extrémité (4) du dispositif (1) étant maintenue à une température supérieure a la température de la première extrémité (2), c) régénération par déplacement du piston (5) vers la seconde extrémité (6) de la chambre de compression et transfert du fluide de la seconde extrémité (6) de la chambre de compression vers la première extrémité (3) de la chambre de compression, le procédé comprenant, lors de l'étape c) de régénération, une étape de dérivation en dehors de la chambre de compression d'une fraction du fluide transféré de la seconde extrémité (6) de la chambre de compression vers la première extrémité (3) de la chambre de compression.

12. Procédé selon la revendication 11, **caractérisé en ce que** l'admission du fluide à l'état liquide à une pression initiale dans la première extrémité (3) de la chambre de compression est réalisée à partir d'un réservoir (13) de fluide liquéfié et **en ce que** lors de l'étape de dérivation la fraction de fluide est envoyée vers ce réservoir (13).

## Patentansprüche

1. Vorrichtung zur Kompression eines Fluids, die eine Kompressionskammer aufweist, die einen beweglichen Kolben (5) aufnimmt, wobei die Vorrichtung ein erstes Ende (2) umfasst, das ein erstes Ende (3) der Kompressionskammer aufnimmt, wobei die Vorrichtung (1) ein zweites Ende (4) umfasst, das ein zweites Ende (6) der Kompressionskammer aufnimmt, wobei der Kolben (5) zwischen dem ersten (3) und dem zweiten (6) Ende der Kompressionskammer translatorisch beweglich ist, wobei die Vorrichtung (1) einen Regenerationskreislauf (7) umfasst, der das erste (3) und das zweite (6) Ende der Kompressionskammer verbindet und einen Regenerator (17) aufweist, wobei die Vorrichtung (1) eine Zuführungsleitung (8) umfasst, die ein stromaufwärtiges Ende, das dazu bestimmt ist, mit einer Quelle (13) für zu komprimierendes Fluid verbunden zu werden, und ein stromabwärtiges Ende, das in das erste Ende (3) der Kompressionskammer mündet, umfasst, wobei die Zuführungsleitung (8) eine Ventilanordnung (9) umfasst, wobei die Vorrichtung (1) mindestens eine Abführungsleitung (10) für das komprimierte Fluid umfasst, die ein stromaufwärtiges Ende, das mit der Kompressionskammer verbunden ist, und ein stromabwärtiges Ende, das dazu bestimmt ist, mit einem Aufnehmer für das komprimierte Fluid verbunden zu werden, umfasst, **dadurch gekennzeichnet, dass** sie eine Bypassleitung (12) umfasst, die ein stromaufwärtiges Ende, das mit dem Regenerationskreislauf (7) verbunden ist, und ein stromabwärtiges Ende, das mit einem Rückgewinnungselement (13) verbunden ist, umfasst, wobei die Bypassleitung (12) dazu ausgestaltet ist, einen Fluidanteil bei einer Regenerationsphase zu entnehmen, während welcher der Kolben (5) von dem zweiten Ende (6) zu dem ersten Ende (3) der Kompressionskammer verlagert wird.

2. Vorrichtung nach Anspruch 1, **dadurch gekennzeichnet, dass** das stromaufwärtige Ende der Bypassleitung (12) mit dem Regenerationskreislauf (7) an dem zweiten (6) Ende der Kompressionskammer und/oder an dem ersten (3) Ende der Kompressionskammer und/oder an dem Regenerator (17) verbunden ist.

3. Vorrichtung nach Anspruch 1 oder 2, **dadurch gekennzeichnet, dass** die Bypassleitung (12) eine Ventilanordnung (14) umfasst, zum Beispiel mindestens ein Druck- und/oder Volumenstromregelungsventil.

4. Vorrichtung nach einem der Ansprüche 1 bis 3, **dadurch gekennzeichnet, dass** sie einen Behälter (13) für verflüssigtes Fluid, zum Beispiel für verflüssigtes kryogenes Fluid, umfasst, der eine Fluidquelle bildet, die mit dem stromaufwärtigen Ende der Zuführungsleitung (8) verbunden ist, und dass das Rückgewinnungselement (13) den Behälter (13) umfasst.

5. Vorrichtung nach den Ansprüchen 3 und 4, **dadurch gekennzeichnet, dass** die Bypassleitung (12) ein Druck- und/oder Volumenstromregelungsventil (14) umfasst, das in Abhängigkeit von dem Druck in dem Fluidbehälter (13) und/oder von dem Druck in der Kompressionskammer gesteuert wird, zum Beispiel an dem zweiten Ende (6) der Kompressionskammer.

6. Vorrichtung nach Anspruch 5, **dadurch gekennzeichnet, dass** das Druck- und/oder Volumenstromregelungsventil (14) dazu ausgestaltet ist, eine in Abhängigkeit von der Druckdifferenz zwischen dem Druck in dem Fluidbehälter (13) und dem Druck in der Kompressionskammer gesteuerte Regelung zu gewährleisten.

7. Vorrichtung nach einem der Ansprüche 1 bis 6, **dadurch gekennzeichnet, dass** die Ventilanordnung der Zuführungsleitung (8) ein Rückflussverhinderungselement (9) wie ein Rückflussverhinderungsventil umfasst.

8. Vorrichtung nach einem der Ansprüche 1 bis 7, **dadurch gekennzeichnet, dass** das zweite Ende (4) der Vorrichtung (1) ein Heizsystem (15) umfasst.

9. Vorrichtung nach einem der Ansprüche 1 bis 8, **dadurch gekennzeichnet, dass** das erste Ende (2) der Vorrichtung (1) ein Kühl- oder Heizsystem umfasst.

10. Vorrichtung nach einem der Ansprüche 1 bis 9, **dadurch gekennzeichnet, dass** der Regenerator (17) ein Wärmetauscherrohr umfasst, insbesondere ein zylindrisches Rohr, das mit einem Material gefüllt ist, das dazu ausgestaltet ist, die Wärme zu speichern und wieder abzugeben und das Fluid im flüssigen und/oder gasförmigen Zustand durchströmen zu lassen.

11. Verfahren zur Kompression von Fluid mittels einer Vorrichtung nach einem der Ansprüche 1 bis 10, **dadurch gekennzeichnet, dass** es die folgenden aufeinander folgenden Schritte umfasst: a) Einlassen eines Fluids im flüssigen Zustand mit einem Anfangsdruck in das erste Ende (3) der Kompressionskammer über die Zuführungsleitung (8), b) Komprimieren durch Verlagern des Kolbens (5) zu dem ersten Ende (3) der Kompressionskammer hin und Transferieren des Fluids von dem ersten Ende (3) der Kompressionskammer zu dem zweiten Ende (6) der Kompressionskammer über die Regenerationsleitung (7), wobei das zweite Ende (4) der Vorrichtung (1) auf einer Temperatur gehalten wird, die höher als die Temperatur des ersten Endes (2) ist, c) Regeneration durch Verlagern des Kolbens (5) zu dem zweiten Ende (6) der Kompressionskammer hin und Transferieren des Fluids von dem zweiten Ende (6) der Kompressionskammer zu dem ersten Ende (3) der Kompressionskammer, wobei das Verfahren bei dem Regenerationsschritt c) einen Schritt des Bypassens, außerhalb der Kompressionskammer, eines Anteils des von dem zweiten Ende (6) der Kompressionskammer zu dem ersten Ende (3) der Kompressionskammer transferierten Fluids umfasst.

12. Verfahren nach Anspruch 11, **dadurch gekennzeichnet, dass** das Einlassen des Fluids im flüssigen Zustand mit einem Anfangsdruck in das erste Ende (3) der Kompressionskammer ausgehend von einem Behälter (13) für verflüssigtes Fluid erfolgt und dass bei dem Schritt des Bypassens der Fluidanteil zu diesem Behälter (13) geleitet wird.

## Claims

1. Device for compressing a fluid, said device having a compression chamber accommodating a mobile piston (5), the device comprising a first end (2) accommodating a first end (3) of the compression chamber, the device (1) comprising a second end (4) accommodating a second end (6) of the compression chamber, the piston (5) being able to move in translation between the first (3) and second (6) ends of the compression chamber, the device (1) comprising a regeneration circuit (7) connecting the first (3) and second (6) ends of the compression chamber and having a regenerator (17), the device (1) comprising a supply pipe (8) comprising an upstream end intended to be connected to a source (13) of fluid to be compressed and a downstream end opening into the first end (3) of the compression chamber, the supply pipe (8) comprising a set of one or more valves (9), the device (1) comprising at least one pipe (10) for discharging the compressed fluid, said discharge pipe comprising an upstream end connected to the compression chamber and a downstream end intended to be connected to a receiver of the compressed fluid, **characterized in that** it comprises a bypass pipe (12) comprising an upstream end connected to the regeneration circuit (7) and a downstream end connected to a recovery member (13), the bypass pipe (12) being configured to draw a fluid fraction during a regeneration phase during which the piston (5) is moved from the second end (6) towards the first end (3) of the compression chamber.

2. Device according to Claim 1, **characterized in that** the upstream end of the bypass pipe (12) is connected to the regeneration circuit (7) at the second end (6) of the compression chamber and/or at the first end (3) of the compression chamber and/or at the regenerator (17).

3. Device according to Claim 1 or 2, **characterized in that** the bypass pipe (12) comprises a set of one or more valves (14), for example at least one pressure and/or flow rate regulation valve.

4. Device according to any one of Claims 1 to 3, **characterized in that** it comprises a tank (13) of liquefied fluid, for example liquefied cryogenic fluid, forming a fluid source connected to the upstream end of the supply pipe (8), and **in that** the recovery member (13) comprises said tank (13).

5. Device according to Claims 3 and 4, **characterized in that** the bypass pipe (12) comprises a pressure and/or flow rate regulation valve (14) controlled on the basis of the pressure inside the fluid tank (13) and/or the pressure inside the compression chamber, for example at the second end (6) of the compression chamber.

6. Device according to Claim 5, **characterized in that** the pressure and/or flow rate regulation valve (14) is configured to provide controlled regulation on the basis of the pressure differential between the pressure inside the fluid tank (13) and the pressure inside the compression chamber.

7. Device according to any one of Claims 1 to 6, **characterized in that** the set of one or more valves of the supply pipe (8) comprises a non-return member (9) such as a non-return valve.

8. Device according to any one of Claims 1 to 7, **characterized in that** the second end (4) of the device (1) comprises a heating system (15).

9. Device according to any one of Claims 1 to 8, **characterized in that** the first end (2) of the device (1) comprises a cooling or heating system.

10. Device according to any one of Claims 1 to 9, **characterized in that** the regenerator (17) comprises a heat exchanger tube, in particular a cylindrical tube, filled with a material configured to store and release heat and to allow the fluid in the liquid and/or gaseous state to pass.

11. Method for compressing fluid by means of a device according to any one of Claims 1 to 10, **characterized in that** it comprises the following successive steps: a) admitting a fluid in the liquid state into the first end (3) of the compression chamber at an initial pressure via the supply pipe (8), b) compressing by moving the piston (5) towards the first end (3) of the compression chamber and transferring the fluid from the first end (3) of the compression chamber towards the second end (6) of the compression chamber via the regeneration pipe (7), the second end (4) of the device (1) being maintained at a higher temperature than the temperature at the first end (2), c) regenerating by moving the piston (5) towards the second end (6) of the compression chamber and transferring the fluid from the second end (6) of the compression chamber towards the first end (3) of the compression chamber, the method comprising, during the regeneration step c), a step of bypassing, outside the compression chamber, a fraction of the fluid transferred from the second end (6) of the compression chamber towards the first end (3) of the compression chamber.

12. Method according to Claim 11, **characterized in that** the fluid in the liquid state is admitted into the first end (3) of the compression chamber at an initial pressure from a liquefied-fluid tank (13), and **in that** the fluid fraction is sent towards this tank (13) during the bypass step.
